# EUROPEAN PATENT SPECIFICATION

(11) **EP 3 354 965 B1**
(45) Date of publication and mention of the grant of the patent: **30.06.2021**
(21) Application number: 17154057.8
(22) Date of filing: 31.01.2017
(51) Int. Cl.: B60Q 1/12, F21S 41/657, F21S 41/663, F21W 102/155

(54) **LIGHTING DEVICE FOR VEHICLES PROVIDED WITH ROTATING MODULES**
BELEUCHTUNGSVORRICHTUNG FÜR FAHRZEUGE MIT ROTIERENDEN MODULEN
DISPOSITIF D'ÉCLAIRAGE POUR VÉHICULES POURVUS DE MODULES ROTATIFS

(43) Date of publication of application: 01.08.2018
(73) Proprietor: Marelli Automotive Lighting Italy S.p.A., 10078 Venaria Reale (TO) (IT); PSA Automobiles SA, 78300 Poissy (FR)
(72) Inventor: RODRIGUEZ ORTEGA, Pablo, 10078 VENARIA REALE (IT); RENARD, Stephanie, 10078 VENARIA REALE (IT); ZATTONI, Sergio, 10078 VENARIA REALE (IT); GONCALVES, Whilk Marcelino, 78140 VELIZY VILLACOUBLAY (FR); LE DALL, Christophe, 78140 VELIZY VILLACOUBLAY (FR); BORE, Michael, 78140 VELIZY VILLACOUBLAY (FR)
(74) Representative: Plebani, Rinaldo

(56) References cited:
- EP-A1- 1 762 774
- WO-A1-2015/107273
- DE-A1-102008 028 797
- US-A1- 2008 266 890

## Description

### Technical field of the invention

The present invention relates to a lighting device equipped with a main lighting module, and with a plurality (i.e. at least two) of secondary lighting modules having rotation capabilities in order to provide selectively a plurality of lighting distributions by means of the same lighting device.

### Technical Background

Lighting devices for vehicles provided with rotating elements, like a rotating reflector, are known in the art.

US4868721 discloses a lighting module comprising a light source and at least one reflector, wherein the reflector is motorized and is designed to intercept a concentrated unidirectional pencil of light produced by the light source, which is fixed with respect to the reflector, causing, due to its rotation around a fixed axis, a continuous rapid scanning of the pencil of light within a predetermined solid angle.

EP2902701 discloses a device of the kind of that of US4868721, but wherein the light source is a LED and the reflector consists of a rotating support having two opposite faces, one constituting the reflector and the other realizing a second function, e.g. an aspect function; a fixed motor rotates the support with respect to the fixed light source in order to bring selectively the two faces on the front side of the device facing toward the direction of motion of the vehicle.

The lighting device according to US4868721 is generally expensive to be produced and may be of complex operation; moreover it may be incapable to meet the modern lighting requirements which imply the capacity of the lighting device to be adaptive to different running situations of the vehicle, e.g. to follow a turn when the driving wheel is rotated and/or to raise or lower the light beam emitted by the device e.g. during a country run or a city run.

EP2902701 may generate only two different main light functions, each by means of one of the two reflective surfaces of the support. DE102008028797 *does not solve these problems.*

### Summary of the invention

The object of the present invention is to provide a lighting device for vehicles comprising at least a rotating lighting module, able to carry out a plurality of lighting function though being of simple and compact construction, cost-effective and highly reliable.

According to the invention, therefore, a lighting device for vehicles is provided having the features set out in the appended claims.

### Brief description of the drawings

Further features and advantages of the present invention will become more apparent from the following description of one non-limiting embodiment thereof, made with reference to the figures in the accompanying drawings, in which:
- figure 1 shows schematically a perspective view of a lighting device for vehicles seen from the rear, i.e. on the side opposite to the forward driving direction of the vehicle, realized according to the present invention; and
- figures 2, 3, 4a, 4b, 5a, 5b show schematically the different light distributions (as they appear on the standard test screen at 25 m) which can be generated by the lighting device of figure 1.

### Detailed description

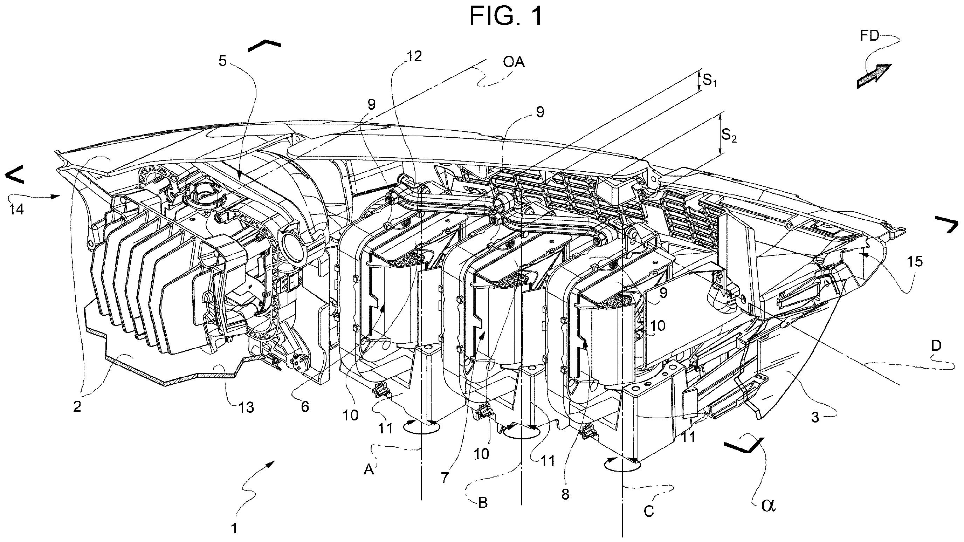

With reference to figure 1, reference number 1 indicates as a whole a lighting device consisting, in the non-limiting embodiment shown, in a vehicle headlight assembly, which is only schematically shown from the rear, with parts, which are not essential for describing the invention, removed for sake of simplicity.

The lighting device 1 comprises a generally cup-shaped housing body 2, shown only in part in figure 1, namely with a rear portion thereof removed; housing body 2 is designed to be mounted on a vehicle, known and not shown for sake of simplicity. Housing body 2 is made of synthetic plastic material by injection molding and has a front inlet opening in use facing opposite to the vehicle and toward a forward driving direction FD of the vehicle, indicated by an arrow; the front inlet opening is closed by a transparent cover 3, normally constituted by a terse lens (i.e. a transparent lens not provided with optical functions).

According to the present invention, housing body 2 carries at the interior thereof at least one main lighting module 5 and at least two, and preferably three or more, in the embodiment shown three, secondary (or auxiliary) lighting modules 6, 7 and 8, arranged side by side to one another and on the same side of the main lighting module 5: all the modules 5-8 may be visible from the outside through the transparent cover 3.

The housing body 5 is designed to be mounted in a known manner on a vehicle (not shown) with the front inlet opening arranged to face in use toward the forward driving direction FD of the vehicle; the main lighting module 5 and the at least two (three in the embodiment shown) secondary lighting modules 6,7,8 are arranged inside the housing body 2, facing the inlet opening.

The main lighting module 5 is carried in a fixed manner within the housing body 2, while the secondary lighting modules 6,7,8 are carried within the housing body 2 rotatable in relation to the housing body 2 itself and to the main lighting module 5, each around a respective its own first axis, each indicated in figure 1 with a different reference letter "A", "B" and "C".

The first axes A,B,C of the secondary lighting modules 6,7,8 are arranged parallel to each other and transverse to a plane α which, in a mounting position of the lighting device 1, is an horizontal plane and contains the optical axes of the lighting devices 5,6,7,8; for sake of simplicity in figure 1 is shown the optical axis OA of the fixed lighting device 5, which is arranged parallel to the direction FD. The optical axes of the lighting modules 6,7,8, as it will be seen in greater details herein below, may be arranged parallel to the optical axis OA of at an angle thereto, but anyway are always contained in (i.e. they lay on) plane α.

As it is described in greater details in the parallel patent application EP16200369.3 filed on November 23, 2016 in the name of the same applicants, each rotating lighting module 6,7,8 comprises at least one first light source 9, at least one first reflector 10 and at least one first actuator 11 to rotate the reflector 10 of each module 6,7,8 relative to the respective light source 9 around the first axis of each module A, B, C.

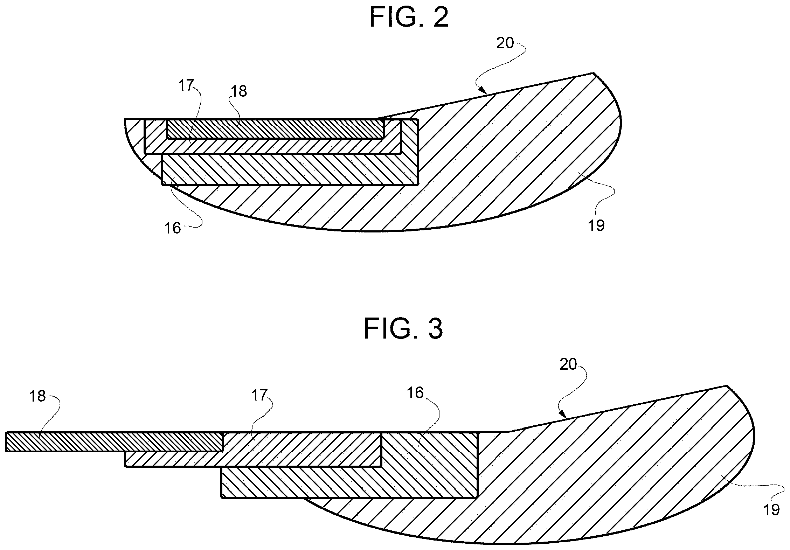

According to one of the main features of the present invention, the at least two (three in the example shown) secondary lighting modules 6,7,8 are either designed and/or arranged within the housing body 2 so as to generate (see figure 2, 3, 4a, 4b, 5a, 5b) on a standard test screen placed in front of the lighting device 1, when they are switched on, respective light projections shown as areas having different hatches and indicated with the reference numbers 16, 17, 18, which light projections 16,17,18 are arranged at least in part offset to one another in a vertical direction, so as to preferably overlap, but in part only.

According to the non-limitative embodiment shown, the above technical feature is obtained because the at least two (three in the example shown) secondary lighting modules 6,7,8, are arranged within the housing body 2 offset to one another in the direction of the first axes A,B,C; in particular, between modules 6 and 7 there is a first offset S1 (see figure 1) and between modules 7 and 8 there is a second offset S2, which may be of a value identical to or greater than the value of offset S1.

In the example shown, the modules 6,7,8 are all supported by the same lattice (i.e. frame) structure 12 provided rigid within the housing body 2, but are supported by it at different heights in relation to a bottom wall 13 of the housing body 2.

The main lighting module 5 is mounted rigid with the housing body 2 and stationary therewith at one first lateral end 14 of the housing body 2. Lateral end 14 is preferably that one designed to be arranged in use on the outboard side of the vehicle on which the lighting device 1 is mounted.

The at least two (three in the example shown) secondary lighting modules 6,7,8, are arranged side by side to each other and on one side of the main lighting module 5 opposite to the first lateral end 14 of the housing body.

Moreover, the secondary lighting modules 6,7,8 are arranged so as to be progressively closer to the bottom wall 13 of the housing body 2 starting from the main lighting module 5 and proceeding toward a second lateral end 15 of the housing body 2, opposite to the first lateral end 14.

As already described, in the preferred embodiment shown the lighting device 1 comprises three secondary lighting modules 6,7,8 arranged side by side and offset to each other in the direction of their respective first axes A,B,C. Moreover, all and each one of the secondary lighting modules 6,7,8 are designed to be switched on/off and rotated around the respective first axis A,B,C independently of one another, since they are provided with independent actuators 11, all controlled by a control unit of the vehicle, not shown for sake of simplicity.

The main lighting module 5 is mounted rigid at the first lateral end 14 of the housing body 2 and at least one of the secondary lighting modules 6,7,8, namely module 8 which is arranged at the second lateral end 15 of the housing body 2 is mounted within the housing body 2 further rotatable around a second axis D, substantially perpendicular to the first axis C thereof.

In the embodiment shown, all the secondary lighting modules 6,7,8 are mounted within the housing body 2 further rotatable around a common second axis D substantially perpendicular to the first axes A,B,C, so as to be rotatable around the second axis D all together under the action of a further, common actuator, not shown for sake of simplicity.

According to a possible alternative embodiment, not shown but obvious for the skilled person on the basis of what described up to now, all the secondary lighting modules 6,7,8 are mounted within the housing body 2 around respective second axes all parallel to axis D and each substantially perpendicular to the first axis A,B,C of the same secondary lighting module 6,7,8, so as to be rotatable each around its own second axis independently of one another.

According to the preferred embodiment and with reference to the figures 2, 3, 4a, 4b, 5a, 5b, the secondary lighting modules 6,7,8 are mounted within the housing body 2, e.g. in the manner described before, so as to assume selectively, each one a plurality of different positions.

In particular, they may assume a first position (shown in figure 1) in which they are oriented substantially parallel to the main lighting module 5 and in which their light projections 16,17,18 (figure 2) are substantially fully superimposed on the same test screen to a light projection 19 generated by the main lighting module 5 when it is switched on.

They may assume further a plurality of second positions (figure 3) wherein they are oriented such as to form different angles with the main lighting module 5 on the side of the main lighting module 5 opposite to the first lateral end 14 immediately adjacent to the main lighting module 5, so as that their light projections 16,17,18, generated respectively by lighting modules 6,7,8 on the test screen are only partially superimposed to one another and to the light projection 19 of the main lighting module 5, and are simultaneously shifted progressively farther away from the first lateral end 14 in relation to the light projection of the secondary lighting module immediately adjacent thereto on the side of the main lighting module 5, namely the projection 18 of the module 8 is fully shifted on the left side in figure 3, the projection 17 of module 7 is shifted less to the left, so as to flank projection 18 of the side of projection 19, and the projection 16 of module 6 is only partially shifted on the left, less than projection 17, so as to flank projection 17 on the side of projection 19, to remain at least partially superimposed with projection 19 itself.

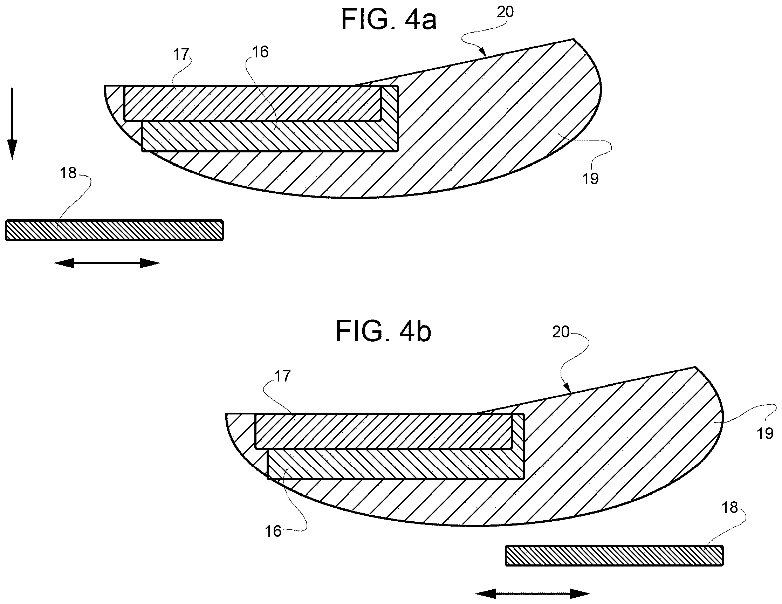

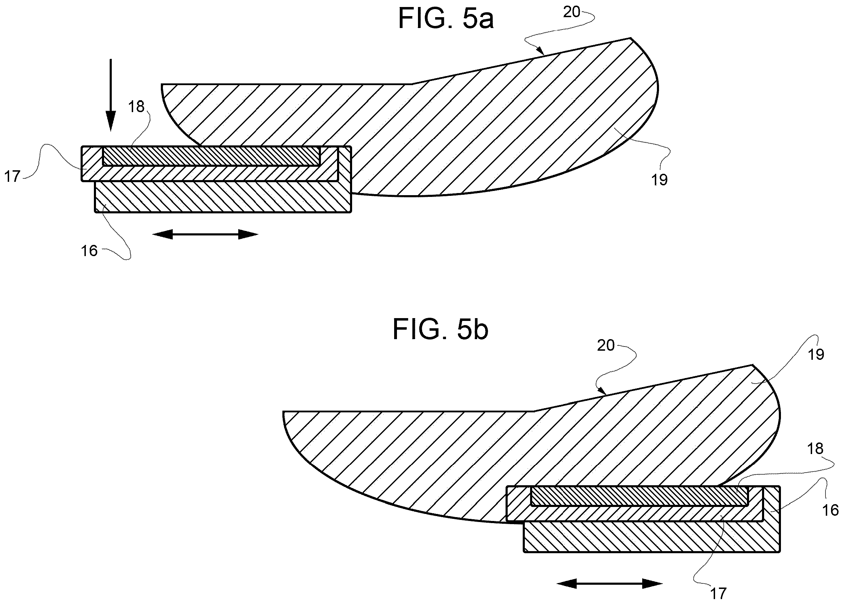

Finally, if the possibility of rotation around axis D is implemented, they may assume a plurality of third positions wherein the light projection 18 of at least one of the secondary lighting modules, namely of module 8, is shifted laterally in relation to the light projection 19 of the main lighting module 5, or the projections 16,17,18 of all the secondary lighting modules 6,7,8 are shifted laterally of substantially the same angle in relation to the light projection 19 of the main lighting module 5, either on the side of lateral end 15 (figures 4a,5a) or on the side of lateral end 14 (figures 4b,5b) and are simultaneously shifted downward in relation to the light projection 19, e.g. below a cut-off line 20 of the lighting module 5, so as that only a partial superimposition with projection 19 is obtained in vertical direction.

In this manner, it can be obtained easily a plurality of even very different lighting patterns with the same lighting device 1. During the normal forward march the configuration shown in figure 2 is selected, so there is a better illumination forward.

During turns the configuration of figure 3 is selected, in order to better illuminate the turn and with the advantage, with respect to the known adaptive lighting devices, that there is a better and more continuous illumination of the forward trajectory of the vehicle.

The configuration of figures 4a,b, or 5a,b may be selected e.g. in case of fog or when crossing another vehicle.

All the aims of the invention are therefore accomplished.

## Claims

1. A lighting device (1) for vehicles, comprising an housing body (2) designed to be mounted on a vehicle and having a front inlet opening arranged to face in use toward a forward driving direction of the vehicle, a transparent cover (3) to close the front inlet opening, a main lighting module (5) and at least two secondary lighting modules (6,7,8), the main lighting module and the at least two secondary lighting modules being arranged inside the housing body (2), facing the inlet opening; the main lighting module (5) being carried in a fixed manner within the housing body (2), while the at least two secondary lighting modules (6,7,8) being carried within the housing body (2) rotatable in relation to the housing body and to the main lighting module, each around a respective its own first axis (A,B,C), the first axes (A,B,C) of the at least two secondary lighting modules being arranged parallel to each other and transverse to an horizontal plane (α) in a mounting position of the lighting device; wherein the at least two secondary lighting modules (6,7,8) are designed and/or arranged within the housing body (2) so as to generate on a test screen placed in front of the lighting device, when they are switched on, respective light projections (16,17,18) which are arranged at least in part offset to one another in a vertical direction; **characterized in that** all the secondary lighting modules (6, 7, 8) are designed to be switched on/off and rotated around the respective first axis independently of one another.

2. A lighting device according to claim 1, **characterized in that** the at least two secondary lighting modules (6,7,8) are arranged within the housing body (2) offset to one another in the direction of the first axes (A,B,C).

3. A lighting device according to claim 1 or 2, **characterized in that** the main lighting module (5) is mounted rigid at one first lateral end (14) of the housing body (2) designed to be arranged in use on the outboard side of the vehicle; the at least two secondary lighting modules (6,7,8,) being arranged side by side to each other and on one side of the main lighting module opposite to the first lateral end (14) of the housing body.

4. A lighting device according to claim 3, **characterized in that** the at least two secondary lighting modules (6,7,8) are arranged progressively closer to a bottom wall (13) of the housing body starting from the main lighting module (5) and proceeding toward a second lateral end (15) of the housing body, opposite to the first lateral end.

5. A lighting device according to anyone of the preceding claims 2 to 4, **characterized in that** it comprises three secondary lighting modules (6,7,8) arranged side by side and offset to each other in the direction of their respective first axes (A,B,C).

6. A lighting device according to anyone of the preceding claims, **characterized in that** the main lighting module (5) is mounted rigid at one first lateral end (14) of the housing body and at least one of the secondary lighting modules (8) arranged at a second lateral end (15) of the housing body opposite to the first end (14) is mounted within the housing body further rotatable around a second axis (D), substantially perpendicular to the first axis (C).

7. A lighting device according to anyone of the preceding claims, **characterized in that** all the secondary lighting modules (6,7,8) are mounted within the housing body (2) further rotatable either around a common second axis (D) substantially perpendicular to the first axes (A, B, C), so as to be rotatable around the second axis all together, or around respective second axes each substantially perpendicular to the first axis of the same secondary lighting module, so as to be rotatable each around its own second axis independently of one another.

8. A lighting device according to anyone of the preceding claims, **characterized in that** the secondary lighting modules (6,7,8) are mounted within the housing body (2) so as to assume selectively, each one:
- a first position in which they are oriented substantially parallel to the main lighting module (5) and in which their light projections (16,17,18) are superimposed on the same test screen to a light projection (19) of the main lighting module (5) when it is switched on;
- a plurality of second positions wherein they are oriented such as to form different angles with the main lighting module (5) on the side of the main lighting module opposite to a first lateral end (14) of the housing body immediately adjacent to the main lighting module (5), so as that their light projections (16,17,18) on said test screen are only partially superimposed to one another and to the light projection (19) of the main lighting module, the light projection (16,17,18) of each secondary lighting module being shifted progressively farther away from the first lateral end (14) of the housing body in relation to the light projection of the secondary lighting module immediately adjacent thereto on the side of the main lighting module (5);
- a plurality of third positions wherein the light projection (18) of at least one or of all (16,17,18) the secondary lighting modules are shifted laterally of substantially the same angle in relation to the light projection (19) of the main lighting module and are simultaneously shifted downward in relation to the light projection of the main lighting module, so as that only a partial superimposition therewith is obtained.

9. Vehicle provided with a lighting device (1) according to anyone of the preceding claims.

## Patentansprüche

1. Beleuchtungsvorrichtung (1) für Fahrzeuge, umfassend einen Gehäusekörper (2), der dafür ausgelegt ist, an einem Fahrzeug montiert zu werden, und der eine vordere Einlassöffnung aufweist, die so angeordnet ist, dass sie im Gebrauch in eine Vorwärtsfahrtrichtung des Fahrzeugs weist, eine transparente Abdeckung (3) zum Verschließen der vorderen Einlassöffnung, ein Hauptbeleuchtungsmodul (5) und wenigstens zwei sekundäre Beleuchtungsmodule (6, 7, 8), wobei das Hauptbeleuchtungsmodul und die wenigstens zwei sekundären Beleuchtungsmodule innerhalb des Gehäusekörpers (2) angeordnet sind und der Einlassöffnung zugewandt sind; wobei das Hauptbeleuchtungsmodul (5) fest innerhalb des Gehäusekörpers (2) getragen wird, während die wenigstens zwei sekundären Beleuchtungsmodule (6, 7, 8) innerhalb des Gehäusekörpers (2) drehbar bezüglich des Gehäusekörpers und des Hauptbeleuchtungsmoduls getragen werden, jedes um eine jeweilige eigene erste Achse (A, B, C), wobei die ersten Achsen (A, B, C) der wenigstens zwei sekundären Beleuchtungsmodule parallel zueinander und quer zu einer horizontalen Ebene (α) in einer Montageposition der Beleuchtungsvorrichtung angeordnet sind; wobei die wenigstens zwei sekundären Beleuchtungsmodule (6, 7, 8) so ausgebildet und/oder innerhalb des Gehäusekörpers (2) angeordnet sind, dass sie auf einem vor der Beleuchtungsvorrichtung platzierten Testschirm dann, wenn sie eingeschaltet sind, jeweils Lichtprojektionen (16, 17, 18) erzeugen, die in vertikaler Richtung wenigstens zum Teil zueinander versetzt angeordnet sind;
**dadurch gekennzeichnet, dass** alle sekundären Beleuchtungsmodule (6, 7, 8) dafür ausgelegt sind, unabhängig voneinander ein- und ausgeschaltet und um die jeweilige erste Achse gedreht zu werden.

2. Beleuchtungsvorrichtung nach Anspruch 1, **dadurch gekennzeichnet, dass** die wenigstens zwei sekundären Beleuchtungsmodule (6, 7, 8) innerhalb des Gehäusekörpers (2) in Richtung der ersten Achsen (A, B, C) zueinander versetzt angeordnet sind.

3. Beleuchtungsvorrichtung nach Anspruch 1 oder 2, **dadurch gekennzeichnet, dass** das Hauptbeleuchtungsmodul (5) an einem ersten seitlichen Ende (14) des Gehäusekörpers (2) starr montiert ist, das dafür ausgelegt ist, im Gebrauch an der Außenseite des Fahrzeugs angeordnet zu sein; wobei die wenigstens zwei sekundären Beleuchtungsmodule (6, 7, 8) nebeneinander und auf einer zu dem ersten seitlichen Ende (14) des Gehäusekörpers entgegengesetzten Seite des Hauptbeleuchtungsmoduls angeordnet sind.

4. Beleuchtungsvorrichtung nach Anspruch 3, **dadurch gekennzeichnet, dass** die wenigstens zwei sekundären Beleuchtungsmodule (6, 7, 8) ausgehend von dem Hauptbeleuchtungsmodul (5) in Richtung zu einem zu dem ersten seitlichen Ende entgegengesetzten zweiten seitlichen Ende (15) des Gehäusekörpers zunehmend näher an einer Bodenwand (13) des Gehäusekörpers angeordnet sind.

5. Beleuchtungsvorrichtung nach einem der vorangehenden Ansprüche 2 bis 4, **dadurch gekennzeichnet, dass** sie drei sekundäre Beleuchtungsmodule (6, 7, 8) umfasst, die nebeneinander und in Richtung ihrer jeweiligen ersten Achsen (A, B, C) zueinander versetzt angeordnet sind.

6. Beleuchtungsvorrichtung nach einem der vorangehenden Ansprüche, **dadurch gekennzeichnet, dass** das Hauptbeleuchtungsmodul (5) an einem ersten seitlichen Ende (14) des Gehäusekörpers starr montiert ist und wenigstens eines der sekundären Beleuchtungsmodule (8), das an einem zu dem ersten Ende (14) entgegengesetzten zweiten seitlichen Ende (15) des Gehäusekörpers angeordnet ist, innerhalb des Gehäusekörpers ferner um eine zweite, im Wesentlichen senkrecht zu der ersten Achse (C) stehende Achse (D) drehbar montiert ist.

7. Beleuchtungsvorrichtung nach einem der vorangehenden Ansprüche, **dadurch gekennzeichnet, dass** alle sekundären Beleuchtungsmodule (6, 7, 8) innerhalb des Gehäusekörpers (2) ferner entweder um eine gemeinsame zweite Achse (D) im Wesentlichen senkrecht zu den ersten Achsen (A, B, C) drehbar montiert sind, so dass sie alle zusammen um die zweite Achse drehbar sind, oder um jeweilige zweite Achsen drehbar montiert sind, die jeweils im Wesentlichen senkrecht zu der ersten Achse desselben sekundären Beleuchtungsmoduls sind, so dass sie jeweils um ihre eigene zweite Achse unabhängig voneinander drehbar sind.

8. Beleuchtungsvorrichtung nach einem der vorangehenden Ansprüche, **dadurch gekennzeichnet, dass** die sekundären Beleuchtungsmodule (6, 7, 8) innerhalb des Gehäusekörpers (2) so montiert sind, dass sie jeweils wahlweise einnehmen:
- eine erste Position, in der sie im Wesentlichen parallel zu dem Hauptbeleuchtungsmodul (5) ausgerichtet sind und in der ihre Lichtprojektionen (16, 17, 18) auf demselben Testschirm einer Lichtprojektion (19) des Hauptbeleuchtungsmoduls (5), wenn dieses eingeschaltet ist, überlagert sind;
- mehrere zweite Positionen, in denen sie so ausgerichtet sind, dass sie auf der Seite des Hauptbeleuchtungsmoduls (5), die zu einem ersten seitlichen Ende (14) des Gehäusekörpers unmittelbar neben dem Hauptbeleuchtungsmodul (5) entgegengesetzt ist, unterschiedliche Winkel mit dem Hauptbeleuchtungsmodul (5) bilden, so dass ihre Lichtprojektionen (16, 17, 18) auf dem Testschirm nur teilweise einander und mit der Lichtprojektion (19) des Hauptbeleuchtungsmoduls überlagert sind, wobei die Lichtprojektion (16, 17, 18) jedes sekundären Beleuchtungsmoduls bezüglich der Lichtprojektion des dazu auf der Seite des Hauptbeleuchtungsmoduls (5) unmittelbar benachbarten sekundären Beleuchtungsmoduls zunehmend weiter von dem ersten seitlichen Ende (14) des Gehäusekörpers weg verschoben ist;
- mehrere dritte Positionen, in denen die Lichtprojektion (18) wenigstens eines oder aller (16, 17, 18) der sekundären Beleuchtungsmodule um im Wesentlichen den gleichen Winkel bezüglich der Lichtprojektion (19) des Hauptbeleuchtungsmoduls seitlich verschoben ist und gleichzeitig bezüglich der Lichtprojektion des Hauptbeleuchtungsmoduls nach unten verschoben ist, so dass nur eine teilweise Überlagerung damit erzielt wird.

9. Fahrzeug, das mit einer Beleuchtungsvorrichtung (1) nach irgendeinem der vorangehenden Ansprüche ausgestattet ist.

## Revendications

1. Dispositif d'éclairage (1) pour véhicules, comprenant un corps de boîtier (2) conçu pour être monté sur un véhicule et comportant une ouverture d'entrée avant agencée pour être tournée, lors de l'utilisation, vers une direction de conduite vers l'avant du véhicule, un cache transparent (3) pour fermer l'ouverture d'entrée avant, un module d'éclairage principal (5) et au moins deux modules d'éclairage secondaires (6, 7, 8), le module d'éclairage principal et les au moins deux modules d'éclairage secondaires étant agencés à l'intérieur du corps de boîtier (2), faisant face à l'ouverture d'entrée ; le module d'éclairage principal (5) étant porté d'une manière fixe dans le corps de boîtier (2), alors que les au moins deux modules d'éclairage secondaires (6, 7, 8) étant portés dans le corps de boîtier (2) de manière rotative par rapport au corps de boîtier et au module d'éclairage principal, chacun autour de son propre premier axe (A, B, C) respectif, les premiers axes (A, B, C) des au moins deux modules d'éclairage secondaires étant agencés parallèles entre eux et transversalement à un plan horizontal (α) dans une position de montage du dispositif d'éclairage ; dans lequel les au moins deux modules d'éclairage secondaires (6, 7, 8) sont conçus et/ou agencés dans le corps de boîtier (2) de manière à générer sur un écran test placé devant le dispositif d'éclairage, lorsqu'ils sont allumés, des projections lumineuses (16, 17, 18) respectives qui sont agencées au moins en partie décalées les unes des autres dans une direction verticale ; **caractérisé en ce que** tous les modules d'éclairage secondaires (6, 7, 8) sont conçus pour être allumés/éteints et mis en rotation autour du premier axe respectif indépendamment les uns des autres.

2. Dispositif d'éclairage selon la revendication 1, **caractérisé en ce que** les au moins deux modules d'éclairage secondaires (6, 7, 8) sont agencés dans le corps de boîtier (2) décalés l'un de l'autre dans la direction des premiers axes (A, B, C).

3. Dispositif d'éclairage selon la revendication 1 ou 2, **caractérisé en ce que** le module d'éclairage principal (5) est monté rigide au niveau d'une première extrémité latérale (14) du corps de boîtier (2) conçu pour être agencé, lors de l'utilisation, sur le côté extérieur du véhicule ; les au moins deux modules d'éclairage secondaires (6, 7, 8) étant agencés côte à côte et sur un côté du module d'éclairage principal opposé à la première extrémité latérale (14) du corps de boîtier.

4. Dispositif d'éclairage selon la revendication 3, **caractérisé en ce que** les au moins deux modules d'éclairage secondaires (6, 7, 8) sont agencés progressivement plus près d'une paroi de fond (13) du corps de boîtier en partant du module d'éclairage principal (5) et en avançant vers une deuxième extrémité latérale (15) du corps de boîtier, opposée à la première extrémité latérale.

5. Dispositif d'éclairage selon l'une quelconque des revendications 2 à 4, **caractérisé en ce qu'**il comprend trois modules d'éclairage secondaires (6, 7, 8) agencés côte à côte et décalés les uns des autres dans la direction de leurs premiers axes (A, B, C) respectifs.

6. Dispositif d'éclairage selon l'une quelconque des revendications précédentes, **caractérisé en ce que** le module d'éclairage principal (5) est monté rigide au niveau d'une première extrémité latérale (14) du corps de boîtier et au moins l'un des modules d'éclairage secondaires (8) agencés au niveau d'une deuxième extrémité latérale (15) du corps de boîtier opposée à la première extrémité (14) est monté dans le corps de boîtier pouvant en outre tourner autour d'un deuxième axe (D), sensiblement perpendiculaire au premier axe (C) .

7. Dispositif d'éclairage selon l'une quelconque des revendications précédentes, **caractérisé en ce que** tous les modules d'éclairage secondaires (6, 7, 8) sont montés dans le corps de boîtier (2) pouvant en outre tourner soit autour d'un deuxième axe commun (D) sensiblement perpendiculaire aux premiers axes (A, B, C), de manière à pouvoir tourner autour du deuxième axe tous ensemble, soit autour de deuxièmes axes respectifs qui sont chacun sensiblement perpendiculaires au premier axe du même module d'éclairage secondaire, de manière à pouvoir tourner chacun autour de son propre deuxième axe indépendamment les uns des autres.

8. Dispositif d'éclairage selon l'une quelconque des revendications précédentes, **caractérisé en ce que** les modules d'éclairage secondaires (6, 7, 8) sont montés dans le corps de boîtier (2) de manière à adopter sélectivement, chacune parmi :
- une première position dans laquelle ils sont orientés de manière sensiblement parallèle au module d'éclairage principal (5) et dans laquelle leurs projections lumineuses (16, 17, 18) sont superposées sur le même écran test sur une projection lumineuse (19) du module d'éclairage principal (5) lorsqu'il est allumé ;
- une pluralité de deuxièmes positions dans lesquelles ils sont orientés de manière à former différents angles avec le module d'éclairage principal (5) sur le côté du module d'éclairage principal opposé à une première extrémité latérale (14) du corps de boîtier immédiatement adjacent au module d'éclairage principal (5), de telle sorte que leurs projections lumineuses (16, 17, 18) sur ledit écran test sont seulement partiellement superposées les unes sur les autres et sur la projection lumineuse (19) du module d'éclairage principal, la projection lumineuse (16, 17, 18) de chaque module d'éclairage secondaire étant déplacée progressivement plus loin de la première extrémité latérale (14) du corps de boîtier par rapport à la projection lumineuse du module d'éclairage secondaire immédiatement adjacent à celui-ci sur le côté du module d'éclairage principal (5) ;
- une pluralité de troisièmes positions dans lesquelles la projection lumineuse (18) d'au moins un ou de tous (16, 17, 18) les modules d'éclairage secondaires est déplacée latéralement de sensiblement le même angle par rapport à la projection lumineuse (19) du module d'éclairage principal et est déplacée simultanément vers le bas par rapport à la projection lumineuse du module d'éclairage principal, de telle sorte que seule une superposition partielle avec celle-ci est obtenue.

9. Véhicule pourvu du dispositif d'éclairage (1) selon l'une quelconque des revendications précédentes.
